# EUROPÄISCHE PATENTSCHRIFT

(11) **EP 0 527 383 B1**
(45) Veröffentlichungstag und Bekanntmachung des Hinweises auf die Patenterteilung: **28.08.1996**
(21) Anmeldenummer: 92112796.5
(22) Anmeldetag: 27.07.1992
(51) Int. Cl.: C09B 57/02, D06P 3/52, D06P 3/54, C08K 5/3445

(54) **Massefärben von Kunststoffen**
Mass dyeing of synthetic material
Coloration de matières synthétiques dans la masse

(30) Priorität: 08.08.1991 DE 4126244
(43) Veröffentlichungstag der Anmeldung: 17.02.1993
(73) Patentinhaber: BAYER AG, 51368 Leverkusen (DE)
(72) Erfinder: Harnisch, Horst, Dr., W-5203 Much (DE); Roschger, Peter, Dr., W-5000 Köln 80 (DE)

(56) Entgegenhaltungen:
- EP-A- 0 027 529
- GB-A- 2 013 703
- "Justus Liebigs Annalen der Chemie", H. Meerwein et. al., Bd. 641 (1961), Seiten 1-39

## Beschreibung

Die vorliegende Erfindung betrifft ein Verfahren zum Massefärben von Kunststoffen.

Die Massefärbung von Kunststoffen, beispielsweise Thermoplasten, ist bekannt aus z.B. DE 2 319 230, DE 3 609 804, EP 25 136, DE 2 529 434, DE 2 122 663, JP-A 7 343 181, FR 2 143 942, DE 2 132 681,DE 1 769 436.

Nachteilig bei den bekannten Verfahren ist, daß die zur Verwendung kommenden Farbstoffe nur ein beschränktes Einsatzgebiet besitzen, da man fluoreszierende Farbtöne (vgl. DE 2 319 230, DE 3 609 804; EP 25 136; DE 2 529 434; DE 2 122 663, JP-A 7 343 181) oder farbschwache gelbe (vgl. FR 2 143 942, DE 2 132 681, DE 1 769 436) Farbtöne erhält.

Der Erfindung liegt die Aufgabe zugrunde, ein verbessertes Verfahren zum Massefärben zur Verfügung zu stellen. Aus DE-A-28 44 606, 28 03 104 und US-A-4 260 776 ist zwar bereits bekannt, Benzopyranyliden-Farbstoffe zum Färben und Bedrucken von Fasermaterialien und als Laserfarbstoffe zu verwenden, jedoch ohne Hinweis auf das Massefärben.

Im Rahmen einer allgemeinen Abhandlung über Säureamidacetale, Harnstoffacetale und Lactamacetale wird in "Justus Liebigs Annalen der Chemie", H. Meerwein et.al Bd. 641(1961) S.1 ff die Herstellung farbiger Kondensationsprodukte aus Cumarin-diethylacetal mit Verbindungen mit reaktiver CH₃- oder CH₂-Gruppe, wie 1-Phenyl--3-methyl-pyrazolon (5), beschrieben.

Die vorliegende Erfindung betrifft ein Verfahren zum Massefärben von Kunststoffen mit einem Farbstoff, dadurch gekennzeichnet, daß der Farbstoff folgender Formel entspricht 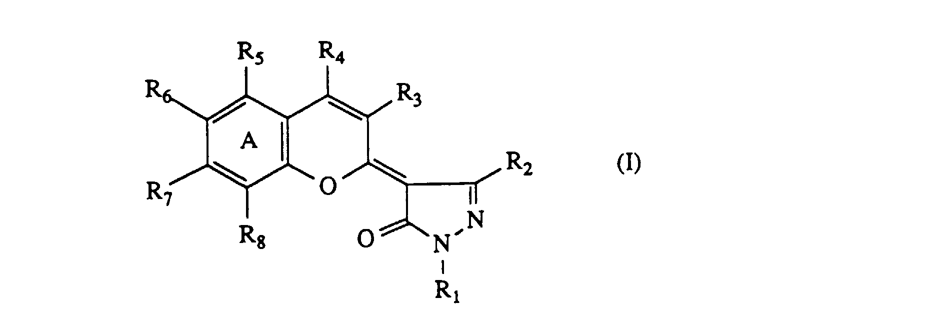 worin bedeuten
- R₁: gegebenenfalls durch insbesondere Alkoxy, Aryloxy, Hydroxy, Acyloxy, Halogen, Cyano, Alkoxycarbonyl, Dialkylaminocarbonyl, Dialkylamino substituiertes Alkyl, gegf. durch Alkyl, Alkoxy, Aryloxy, Hydroxy, Acyloxy, Halogen, Cyano, Alkoxycarbonyl, Dialkylaminocarbonyl, Alkylsulfonyl, Arylsulfonyl, Dialkylsulfamido, Dialkylamino, Aryl substituiertes Aralkyl, gegebenenfalls durch Alkyl, Aryl, Alkyloxy, Aryloxy, Hydroxy, Halogen, Cyano, Nitro, Alkoxycarbonyl, Dialkylaminocarbonyl, Dialkylamino, Alkylsulfonyl, Arylsulfonyl, gegebenenfalls durch Alkyl oder Aryl mono- oder disubstituiertes Sulfonamido substituiertes Aryl oder Heterocyclyl wie Pyridyl, Pyrimidyl, Chinolinyl, Sulfolanyl,
- R₂: gegebenenfalls durch insbesondere Alkoxy, Aryloxy, Hydroxy, Acyloxy, Halogen, Cyano, Alkoxycarbonyl, Dialkylaminocarbonyl, Dialkylamino substituiertes Alkyl, gegebenenfalls durch Alkyl, Alkoxy, Aryloxy, Hydroxy, Acyloxy, Halogen, Cyano, Alkoxycarbonyl, Dialkylaminocarbonyl, Alkylsulfonyl, Arylsulfonyl, Dialkylsulfamido, Dialkylamino, Aryl substituiertes Aralkyl, gegf. durch Alkyl, Aryl, Alkyloxy, Aryloxy, Hydroxy, Halogen, Cyano, Nitro, Alkoxycarbonyl, Dialkylaminocarbonyl, Dialkylamino, Alkylsulfonyl, Arylsulfonyl, Dialkylsulfamido substituiertes Aryl oder Heterocyclyl wie Pyridyl, Pyrimidyl, Chinolinyl, Chlor, Brom, Alkoxycarbonyl, Dialkylcarbamoyl, Cyano, Hydroxy, Alkoxy, Acyloxy oder ein Rest der Formel - NZ₁Z₂, worin
- Z₁: Wasserstoff, Alkyl, Aralkyl, Aryl, Cycloalkyl oder einen heterocyclischen Rest und
- Z₂: einen Acylrest oder
- Z₁ und Z₂: zusammen mit dem gemeinsamen N-Atom den 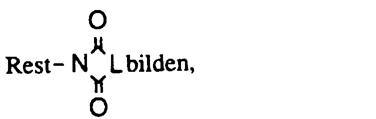
L = 1,2-Phenylen, 1,2, 2,3- oder 1,8-Naphthylen, 1,2-Cyclohexen-1-ylen, 1,2-Ethanylen oder 1,2-Ethylen,
- R₃: Wasserstoff, Alkyl, Aryl, Halogen, Hydroxy, Alkoxy, Cyano, Alkoxycarbonyl, Formyl, Dialkylcarbamoyl, Alkylsulfonyl, Arylsulfonyl, Dialkylaminosulfonyl,
- R₄: Wasserstoff, Alkyl, Aryl, Hydroxy, Alkoxy, Halogen, Cyano, Alkoxycarbamoyl, Alkylsulfonyl, Arylsulfonyl,
- R₅ bis R₈: gleich oder verschieden, Wasserstoff, Alkyl, Aryl, Heterocyclyl, Alkoxy, Aryloxy, Hydroxy, Amino, mono- oder disubstituiertes Amino wie z.B. Alkylamino, Dialkylamino, Alkylsulfonyl, Arylsulfonyl, Dialkylsulfonamido, Halogen oder zusammen mit einem benachbarten Rest ein ankondensierter aromatischer oder heterocyclischer Ring.

Unter Massefärben werden hierbei insbesondere Verfahren verstanden, bei dem der Farbstoff in die geschmolzene Kunststoffmasse eingearbeitet wird, z.B. unter Zuhilfenahme eines Extruders, oder bei dem der Farbstoff bereits Ausgangskomponenten zur Herstellung des Kunststoffes, z.B. Monomeren vor der Polymerisation, zugesetzt wird.

In einer bevorzugten Ausführungsform bedeuten die Substituenten R₃ bis R₈ Wasserstoff.

In einer weiteren bevorzugten Ausführungsform bedeuten R₅ und R₆ zusammen den Rest eines an den Ring A ankondensierten aromatischen oder heterocyclischen Ringes, insbesondere eines Benzringes.

In einer besonders bevorzugten Ausführungsform bedeutet
- R₇ =: Alkoxy, insbesondere C₁-C₄-Alkoxy, und vor allem NR₁₀R₁₁, worin bedeuten
R₁₀ und R₁₁ Wasserstoff, gegebenenfalls durch Alkoxy, Aryloxy, Acyloxy, Cyano, Hydroxy, Dialkylamino, Halogen substituiertes Alkyl, Aryl, Aralkyl oder zusammen mit dem gemeinsamen N-Atom einen heterocyclischen Rest, insbesondere einen Triazolrest, oder Ringbindung zum Ring A.
- R₂ =: C₁-C₄-Alkyl, insbesondere Methyl und tert.-Butyl, Phenyl,
- R₁ =: Phenyl, Naphthyl, wobei die Substituenten ihrerseits substituiert sein können durch Methyl, Alkylsulfonyl, Arylsulfonyl, Dialkylsulfamido und Halogen, insbesondere Chlor, oder Sulfolanyl.

Ganz besonders bevorzugt sind derartige Verbindungen, bei denen
- R₁₀, R₁₁: gleich oder verschieden C₁-C₄-Alkyl oder zusammen mit dem Stickstoffatom einen 5- oder 6-gliedrigen Heterocyclus, insbesondere ein Triazol bedeuten.

Die erfindungsgemäß zu verwendenden Farbstoffe sind zum Teil bekannt, z.B. DE-A 2 844 606, US-A 4 260 776 und DE-A 2 803 104.

Als erfindungsgemäß zu verwendende Farbstoffe der Formel (I) sind die in den Tabellen I - IV aufgeführten Verbindungen genannt.

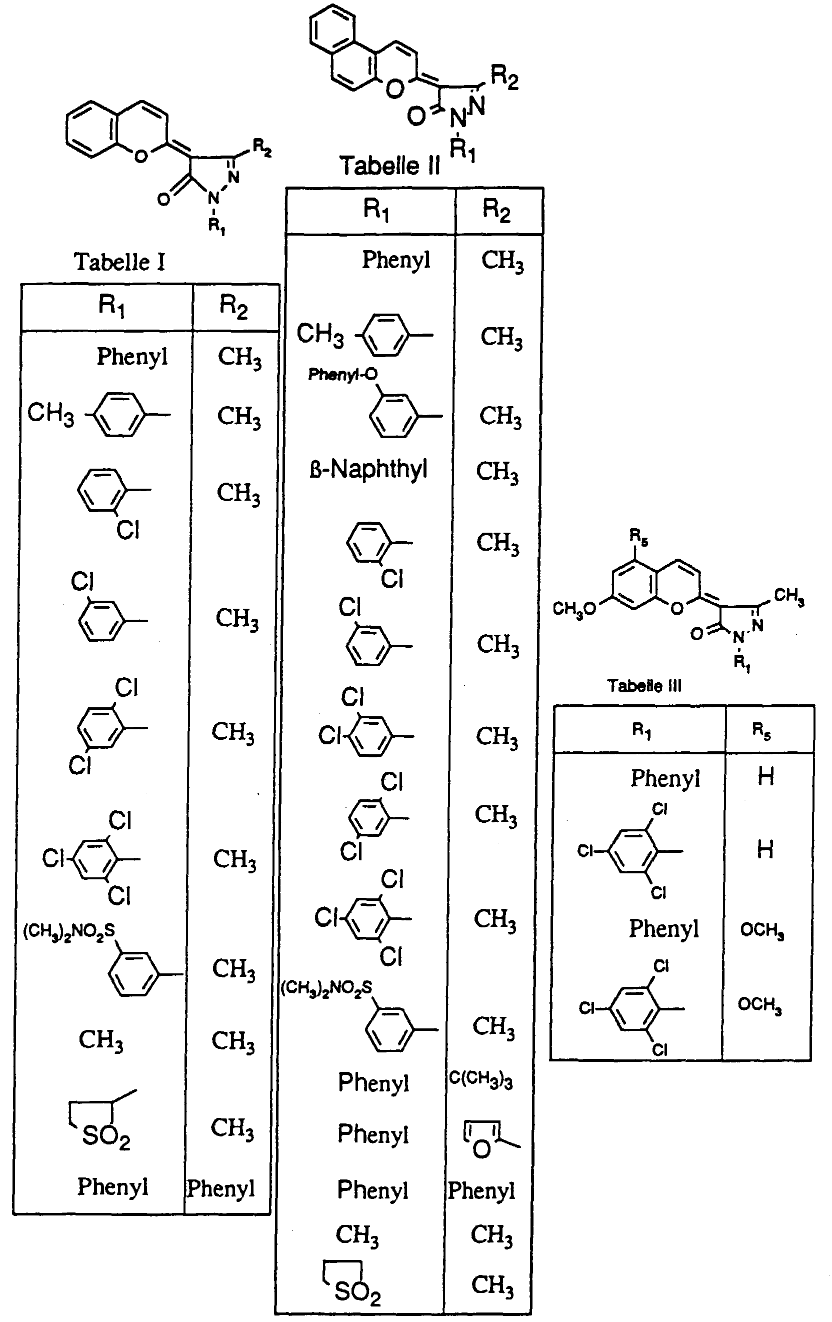

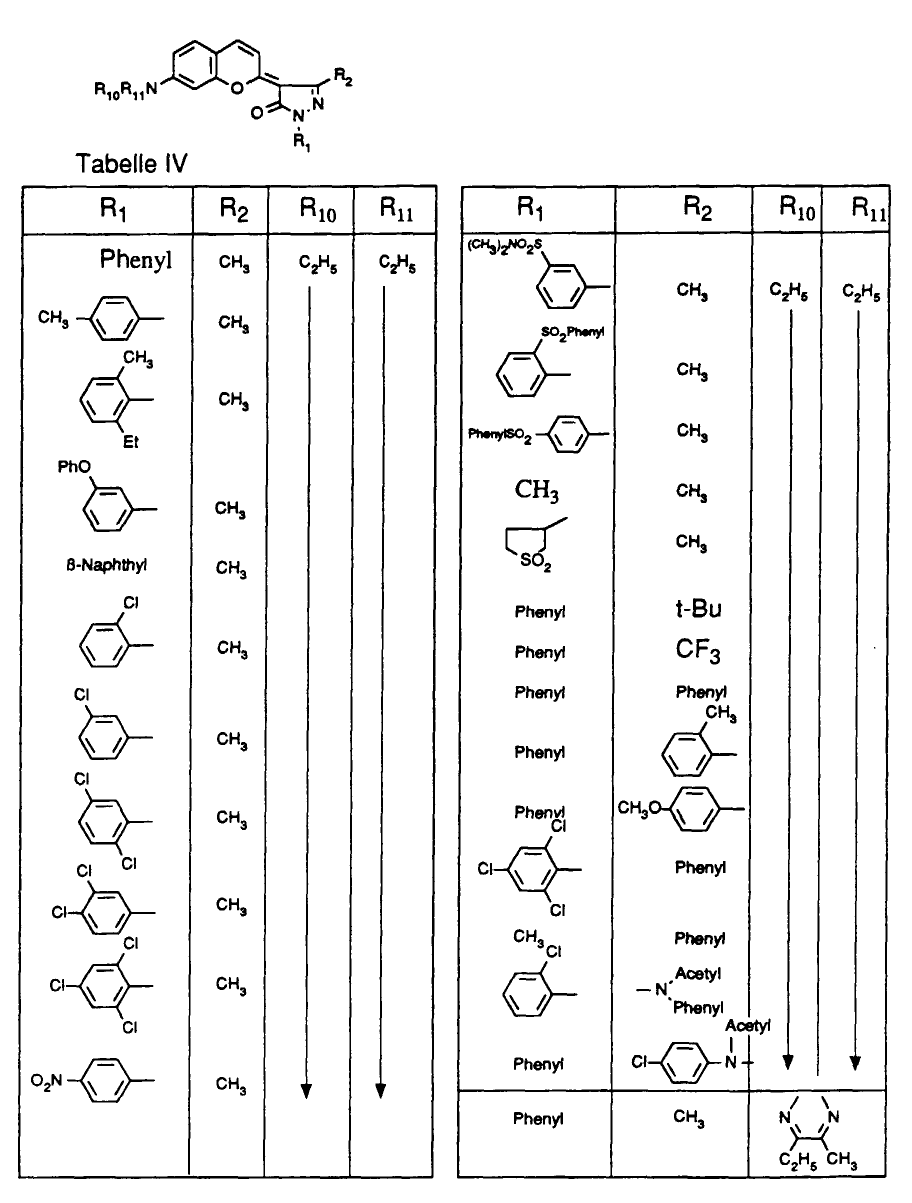

Die erfindungsgemäß zu verwendenden Farbstoffe können grundsätzlich zur Anfärbung in Masse von allen Kunststoffen verwendet werden. Besonders bevorzugte Kunststoffe sind Thermoplaste, beispielsweise Vinylpolymere und Polyester.

Geeignete Vinylpolymere sind Polystyrol, Styrol-Acrylnitril Copolymere, Styrol-Butadien-Copolymere, Styrol-Butadien-Acrylnitril-Terpolymere, Polymethacrylat u.a.

Weiterhin geeignete Polyester sind: Polyethylenterephthalate, Polycarbonate und Celluloseester.

Bevorzugt sind Polystyrol, Styrol-Mischpolymere, Polycarbonate und Polymethacrylat. Besonders bevorzugt ist Polystyrol.

Die erwähnten hochmolekularen Verbindungen können einzeln oder in Gemischen, als plastische Massen oder Schmelzen vorliegen.

Die erfindungsgemäßen Farbstoffe werden in feinverteilter Form zur Anwendung gebracht, wobei Dispergiermittel mit verwendet werden können aber nicht müssen.

Werden die Farbstoffe (I) nach der Polymerisation eingesetzt, so werden sie mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguß-Verfahren zu Formteilen weiterverarbeitet.

Da die Farbstoffe der Formel (I) gegenüber Polymerisationskatalysatoren, insbesondere Peroxiden, beständig sind, ist es auch möglich, die Farbstoffe den monomeren Ausgangsmaterialien für die Kunststoffe zuzusetzen und dann in Gegenwart von Polymerisationskatalysatoren zu polymerisieren. Dazu ist es nötig, die Farbstoffe in den monomeren Komponenten zu lösen oder mit ihnen innig zu mischen.

Die Farbstoffe der Formel (I) werden vorzugsweise zum Färben der genannten Polymeren in Mengen von 0,0001 % bis 1 %, insbesondere 0,01 % bis 0,5 %, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann vorzugsweise in einer Menge von 0,1 % - 2 %, bezogen auf die Polymermenge verwendet werden.

Nach dem erfindungsgemäßen Verfahren erhält man transparente, brillante orange bis rote Färbungen mit guter Hitzebeständigkeit sowie guter Licht- und Wetterechtheit. Die Farbstoffe zeichnen sich weiterhin durch hohe Farbstärke aus.

In das erfindungsgemäße Verfahren können auch Mischungen verschiedener Farbstoffe der Formel (I) und/oder Mischungen von Farbstoffen der Formel (I) mit anderen Farbstoffen und/oder anorganischen bzw. organischen Pigmenten eingesetzt werden.

Die Erfindung wird erläutert, jedoch nicht beschränkt auf die folgenden Beispiele, in denen die Teile gewichtsmäßig angegeben sind.

### Beispiel 1

100 Teile Polystyrol-Granulat und 0,02 Teile eines Farbstoffes der Formel 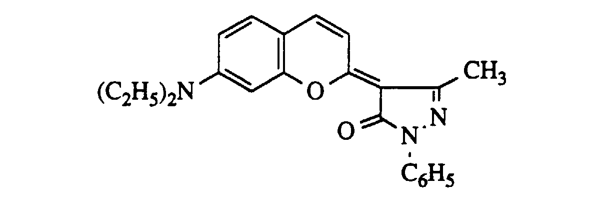 werden im Trommelmischer während 15 Minuten intensiv vermischt. Das trocken angefärbte Granulat wird bei 240°C auf einer Schneckenspritzgießmaschine verarbeitet. Man erhält transparente, rote Platten von sehr guter Lichtechtheit. Anstelle von Polystyrol-Polymerisat können auch Mischpolymerisate mit Butadien und Acrylnitril verwendet werden. Setzt man zusätzlich 0,5 Teile Titandioxid zu, so erhält man farbstarke gedeckte Färbungen.

### Beispiel 2

0,015 Teile des Farbstoffes aus Beispiel 1 und 100 Teile Polymethylmethacrylat werden trocken vermischt und auf einem 1-Wellenextruder bei 230°C homogenisiert. Das als Strang aus dem Extruder austretende Material wird granuliert. Es kann anschließend zu Formen verpreßt werden. Man erhält einen transparent rotgefärbten Kunststoff mit guter Licht- und Wetterechtheit.

### Beispiel 3

100 Teile eines handelsüblichen Polycarbonats werden in Form von Granulat mit 0,03 Teilen des Farbstoffes aus Beispiel 1 trocken gemischt. Das so bestäubte Granulat wird auf einem 2-Wellenextruder bei 290°C homogenisiert. Man erhält eine transparente rote Färbung von guter Lichtechtheit. Das gefärbte Polycarbonat wird als Strang aus dem Extruder ausgetragen und zu Granulat verarbeitet. Das Granulat kann nach den üblichen Methoden der Konfektionierung thermoplastischer Massen verarbeitet werden.

Arbeitet man wie oben beschrieben, aber unter Zusatz von 1 % Titandioxid, so erhält man eine rote gedeckte Färbung.

### Beispiel 4

Mit 100 Teilen Styrol-Acrylnitril-Copolymerisat werden 0,04 Teile des Farbstoffes aus Beispiel 1 trocken vermischt und in einem 2-Wellenextruder bei 190°C homogenisiert, granuliert und dann zu Formen auf übliche Weise verpreßt. Man erhält einen transparent roten Kunststoff von guter Lichtechtheit.

### Beispiel 5

0,025 Teile des Farbstoffes aus Beispiel 1 werden mit 100 Teilen Polyethylenterephthalat einer transparenten Type vermischt und in einem 2-Wellenextruder bei 280°C homogenisiert. Man erhält eine transparente, rote Färbung mit guter Lichtechtheit. Nach anschließender Granulierung kann der eingefärbte Kunststoff nach den üblichen Methoden der thermoplastischen Verformung verarbeitet werden. Arbeitet man unter Zusatz von 1 % Titandioxid, so erhält man eine gedeckte Färbung.

### Beispiel 6

In 98,9 Teilen Styrol werden 0,05 Teile tert.-Dodecylmercaptan sowie 0,05 Teile des Farbstoffes aus Beispiel 1 gelöst. Diese Lösung dispergiert man in einer Lösung aus 200 Teilen entsalztem Wasser, 0,3 Teilen teilverseiftem Polyvinylacetat (z.B. Moviol 50/88 der Fa. Hoechst) und 0,05 Teilen Dodecylbenzolsulfonat. Nach Zusatz von 0,1 Teilen Dibenzoylperoxid in 1 Teil Styrol wird die Dispersion unter kräftigem Rühren auf 80°C erhitzt und die Polymerisation gestartet. Bei Anwendung folgender Polymerisationsbedingungen:
4 h bei 80°C, 2 h bei 90°C, 3 h bei 110°C, 2 h bei 130°C erhält man das Polymerisat in einer Ausbeute von 98 % der Theorie. Das Polymerisat fällt in Form von Perlen an, die je nach Rührbedingungen einen Durchmesser von 0,1 - 1,5 mm (D₅₀-Wert) aufweisen. Das Polymerisat wird durch Filtration vom Serum getrennt, bei 110°C auf eine Restfeuchte von 0,5 % getrocknet. Nach dem Aufschmelzen in einem Mischaggregat (Heißwalze) werden 0,5 % Zinkstearat und 0,2 % Ionol zugemischt und das Polymerisat granuliert.

Das Polymerisat kann nach den üblichen Methoden der thermoplastischen Verformung, z.B. im Spritzguß-Verfahren, zu roten, transparenten Formteilen verarbeitet werden.

### Beispiel 7

In 74,8 Teilen Styrol und 25 Teilen Acrylnitril werden 0,2 Teile tert.-Dodecylmercaptan sowie 0,01 Teile des Farbstoffes aus Beispiel 1 gelöst, welche anschließend in einer Lösung aus 200 Teilen vollentsalztem Wasser und 0,2 Teilen eines mit Natriumhydroxid neutralisierten Copolymerisats von Styrol und Maleinsäureanhydrid dispergiert wird. Nach Zusatz von 0,1 Teilen Dibenzoylperoxid, gelöst in einem Teil Styrol, wird die Dispersion unter kräftigem Rühren auf 80°C erhitzt und die Polymerisation gestartet. Nach der Polymerisation wie im Beispiel 1 wird auch in gleicher Weise, wie im Beispiel angegeben, aufgearbeitet. Als Schmiermittel wird 0,5 % Zinkstearat und als Alterungsschutzmittel 0,5 % Ionol auf der Heißwalze eingearbeitet. Das granulierte Polymerisat läßt sich zu transparenten roten Formteilen verspritzen.

### Beispiel 8

In einem kontinuierlich arbeitenden, überflutet gefahrenen Vorreaktor wird eine Lösung aus 99,95 Teilen Styrol, 0,04 Teilen des Farbstoffes aus Beispiel 1 und 0,01 Teilen Di-tert.butylperoxid eingefahren und bei einer Temperatur von 75°C anpolymerisiert. Die aus dem Vorreaktor austretende, anpolymerisierte Lösung (Polystyrol-Gehalt 20 %) wird in einem 2-Wellenschneckenaggregat eingeführt. Die beiden Wellen laufen mit 20 Upm. gegenläufig. Die vier heiz- bzw. kühlbaren Segmente der Schneckenmaschine werden in der Reihenfolge Produkteintritt - Produktaustritt auf 110°C, 130°C, 160°C, 180°C gehalten. Das Polymerisat verläßt den Schneckenreaktor mit einer Feststoffkonzentration von 80 %. In einem nachgeschalteten Extruder werden 3 Gew.Tl. Ionol und 5 Gew.Tl. Octylalkohol pro 1000 Gew.Tl. Polymerlösung zudosiert, das Polymerisat entgast und anschließend granuliert. Das rot gefärbte Granulat kann zu Formteilen verarbeitet werden.

### Beispiel 9

0,02 Teile des Farbstoffes aus Beispiel 1 werden in 74,97 Teilen Styrol und 25 Teilen Acrylnitril bzw. Methacrylnitril gelöst. Nach Zugabe von 0,01 Teilen Di.-tert.-butylperoxid wird die so erhaltene Lösung in einem kontinuierlich arbeitenden, überflutet gefahrenen Vorreaktor eingefahren. Die Polymerisation und Aufarbeitung erfolgt wie im Beispiel 3 angegeben. Das transparente, rote Granulat kann nach den üblichen Methoden der Verarbeitung thermoplastischer Massen zu Profilen und Platten weiter verarbeitet werden.

### Beispiel 10

In 99,97 Teilen Methylmethacrylat werden 0,03 Teile des Farbstoffes aus Beispiel 1 gelöst. Nach Zugabe von 0,1 Teilen Dibenzoylperoxid wird die Lösung auf 120°C erhitzt und die Polymerisation gestartet. Nach 30 Min. wird das anpolymerisierte Methylmethacrylat zwischen zwei Glasplatten bei 80°C während zehn Stunden auspolymerisiert. Man erhält rote, transparente Polymethylmethacrylat-Platten.

### Beispiel 11

100 Teile Polyamid 6 - Schnitzel, erhalten durch Polymerisation von ε-Caprolactam, werden mit 0,05 Teilen des Farbstoffes aus Beispiel 1 in einer Schüttelmaschine innig vermischt. Die so erhaltenen gepuderten Schnitzel werden bei 260°C in einem Extruder aufgeschmolzen, die erhaltene Schmelze durch eine Einloch-Düse vom Durchmesser 0,5 mm gepreßt und der austretende Faden mit einer Geschwindigkeit von ca. 25 m/Min. abgezogen. Der Faden läßt sich in heißem Wasser auf das Vierfache verstrecken. Erhalten wird ein transparent rot gefärbter Faden von ausgezeichneter Lichtechtheit. Will man eine gedeckte Färbung erhalten, so gibt man zusätzlich 0,5 Teile Titandioxid zu.

Die Verweilzeit im Extruder kann ohne Beeinträchtigung des Farbtons bis zu 30 Minuten betragen.

### Beispiel 12

Verfährt man wie in Beispiel 1 beschrieben mit den in den Tabellen V - IX aufgeführten Farbstoffen, so erhält man die dort angegebenen Nuancen.

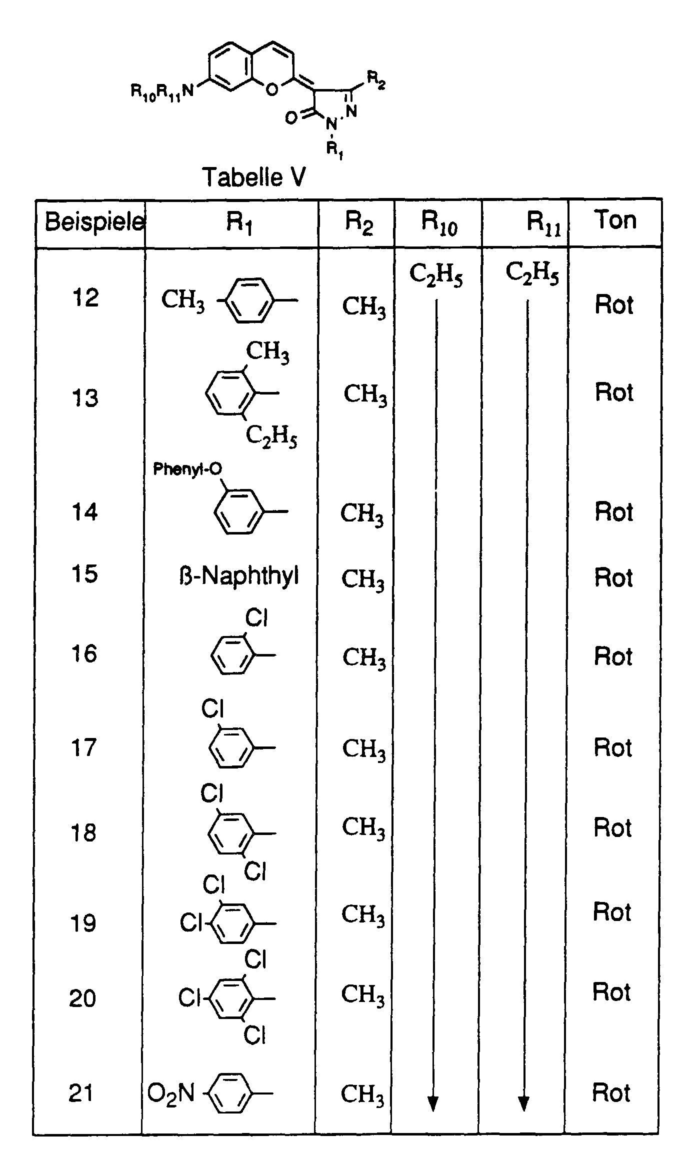

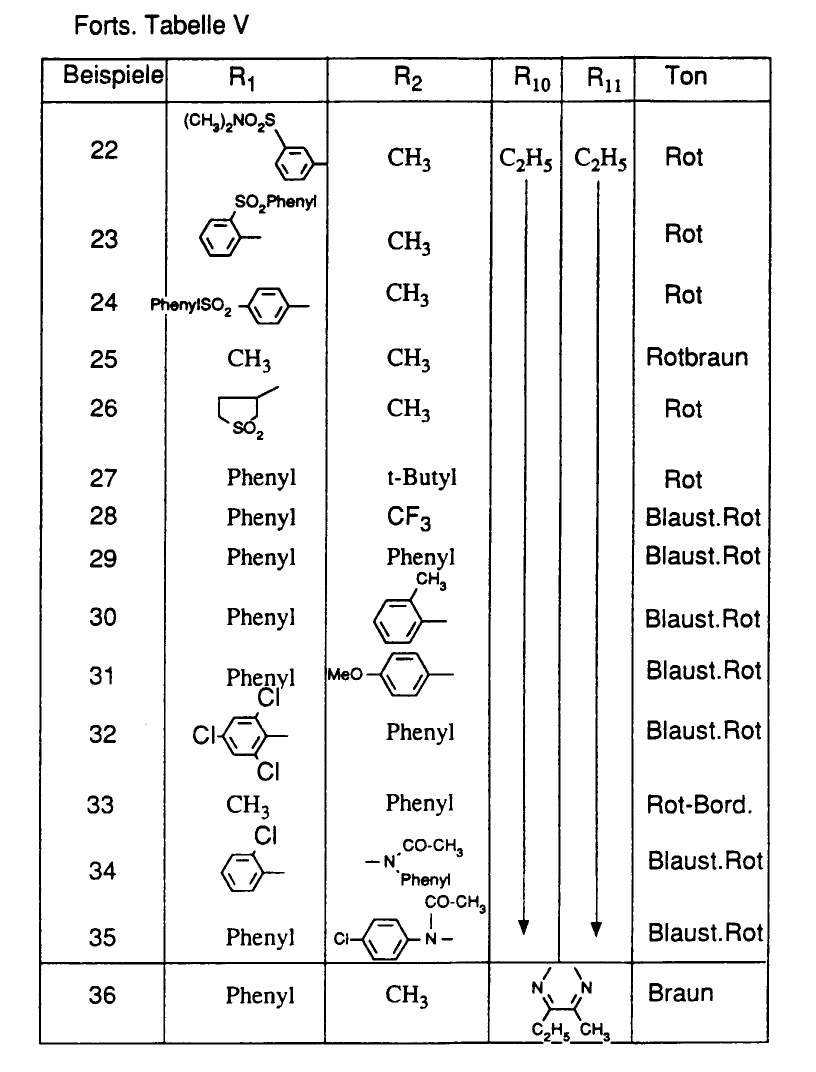

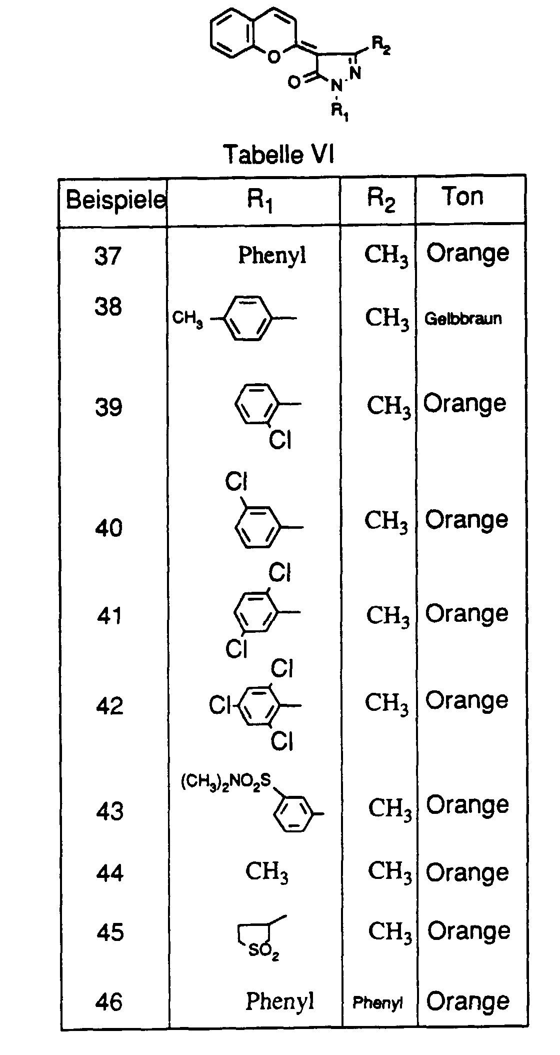

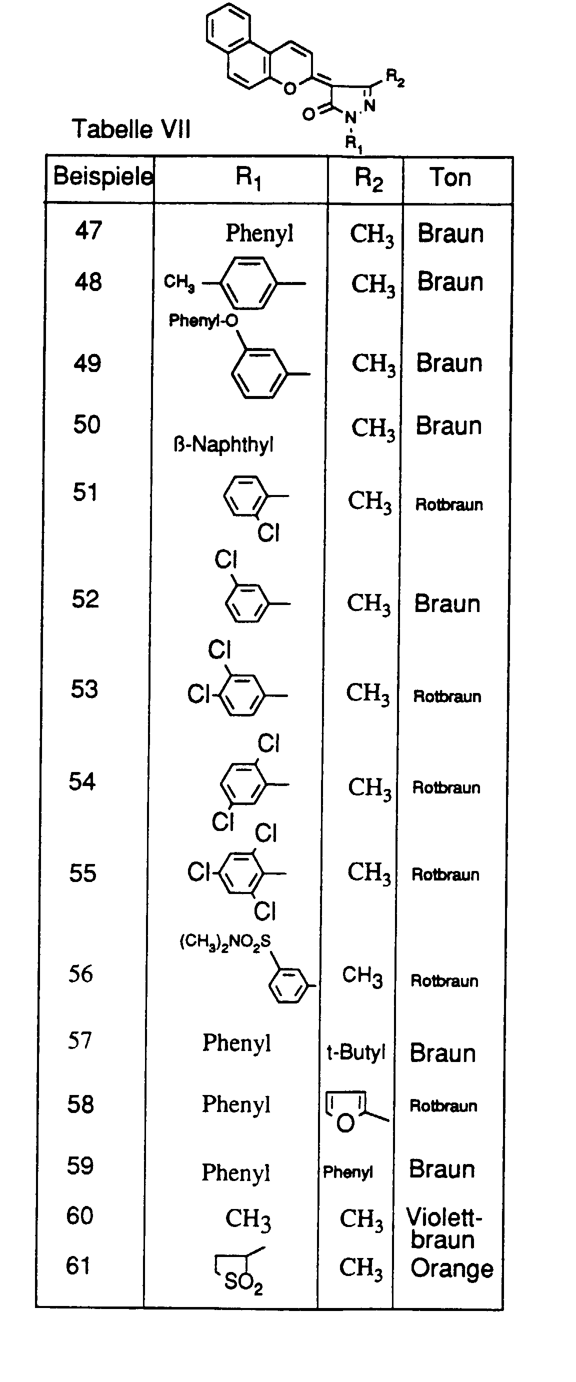

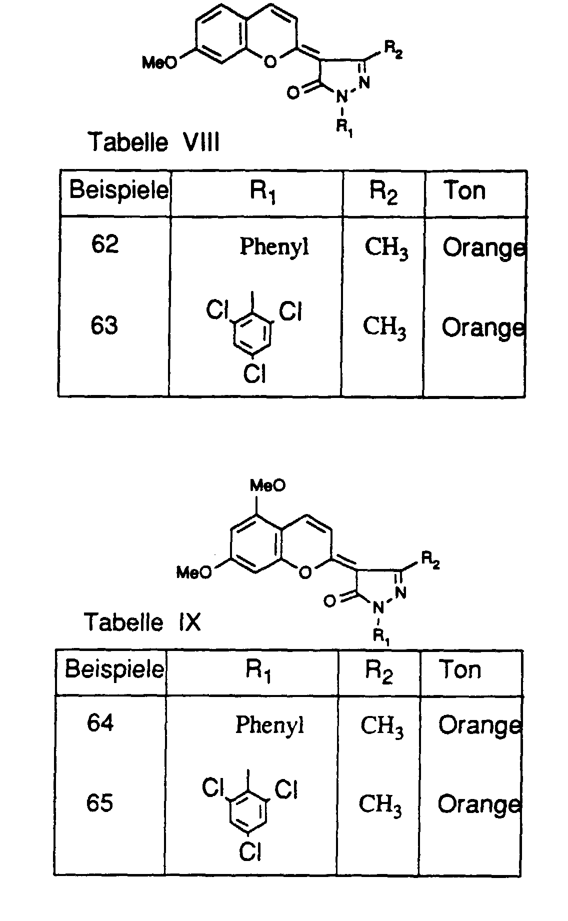

## Patentansprüche

1. Verfahren zum Massefärben von Kunststoffen mit einem Farbstoff, dadurch gekennzeichnet, daß der Farbstoff folgender Formel entspricht 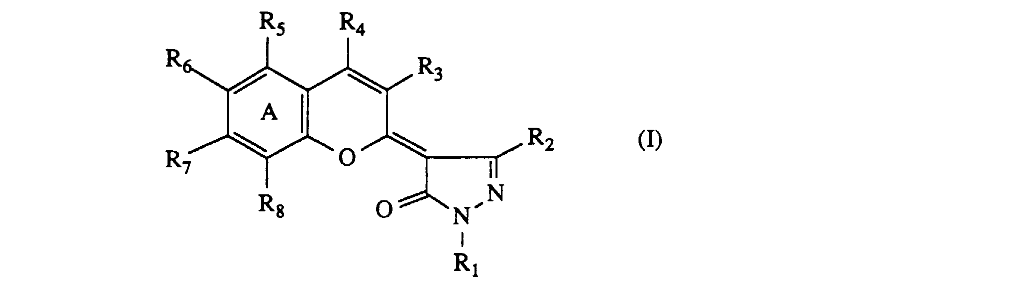 worin bedeuten
R₁ Alkyl, Aralkyl, Aryl oder Heterocyclyl, wobei diese Reste substituiert oder unsubstituiert sein können,
R₂ Alkyl, Aralkyl, Aryl, Heterocyclyl, Alkoxycarbonyl, Dialkylcarbamoyl, Alkoxyacyloxy oder ein Rest der Formel -NZ₁Z₂, wobei diese Reste substituiert oder unsubstituiert sein können, oder Chlor, Brom, Cyano, Hydroxy,
Z₁ Wasserstoff, Alkyl, Aralkyl, Aryl, Cycloalkyl oder einen heterocyclischen Rest und
Z₂ einen Acylrest oder
Z₁ und Z₂ zusammen mit dem gemeinsamen N-Atom den 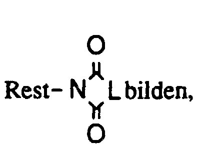
L = 1,2-Phenylen, 1,2, 2,3- oder 1,8-Naphthylen, 1,2-Cyclohexen-1-ylen, 1,2-Ethanylen oder 1,2-Ethylen.
R₃ Wasserstoff, Alkyl, Aryl, Halogen, Hydroxy, Alkoxy, Cyano, Alkoxycarbonyl, Formyl, Dialkylcarbamoyl, Alkylsulfonyl, Arylsulfonyl, Dialkylaminosulfonyl,
R₄ Wasserstoff, Alkyl, Aryl, Hydroxy, Alkoxy, Halogen, Cyano, Alkoxycarbamoyl, Alkylsulfonyl, Arylsulfonyl,
R₅ bis R₈ gleich oder verschieden, Wasserstoff, Alkyl, Aryl, Heterocyclyl, Alkoxy, Aryloxy, Hydroxy, Amino, mono- oder disubstituiertes Amino wie z.B. Alkylamino, Dialkylamino, Alkylsulfonyl, Arylsulfonyl, Dialkylsulfonamido, Halogen oder zusammen mit einem benachbarten Rest ein ankondensierter aromatischer oder heterocyclischer Ring,

2. Verfahren nach Anspruch 1, dadurch gekennzeichnet, daß R₃ bis R₈ Wasserstoff bedeuten.

3. Verfahren nach wenigstens einem der vorhergehenden Ansprüche, dadurch gekennzeichnet, daß R₅ und R₆ zusammen den Rest eines an den Ring A ankondensierten aromatischen oder heterocyclischen Ringes bedeuten.

4. Verfahren nach wenigstens einem der vorhergehenden Ansprüche, dadurch gekennzeichnet daß bedeuten
R₇ = Alkoxy, insbesondere C₁-C₄-Alkoxy, und NR₁₀R₁₁, worin bedeuten
R₁₀ und R₁₁ Wasserstoff, gegebenenfalls durch Alkoxy, Aryloxy, Acyloxy, Cyano, Hydroxy, Dialkylamino, Halogen substituiertes Alkyl, Aryl, Aralkyl oder zusammen mit dem gemeinsamen N-Atom einen heterocyclischen Rest oder Ringbindung zum Ring A.

5. Verfahren nach wenigstens einem der vorhergehenden Ansprüche, dadurch gekennzeichnet, daß bedeuten
R¹ = Phenyl, Naphthyl wobei die Substituenten ihrerseits substituiert sein können
R² = C₁-C₄-Alkyl, Phenyl.

6. Verfahren nach Anspruch 4, dadurch gekennzeichnet, daß bedeuten
R₁₀, R₁₁ gleich oder verschieden C₁-C₄-Alkyl oder zusammen mit dem gemeinsamen N-Atom den Rest eines 5- oder 6-gliedrigen Heterocyclus.

7. Verfahren nach Anspruch 1, dadurch gekennzeichnet, daß wenigstens einer der folgenden Farbstoffe verwendet wird:

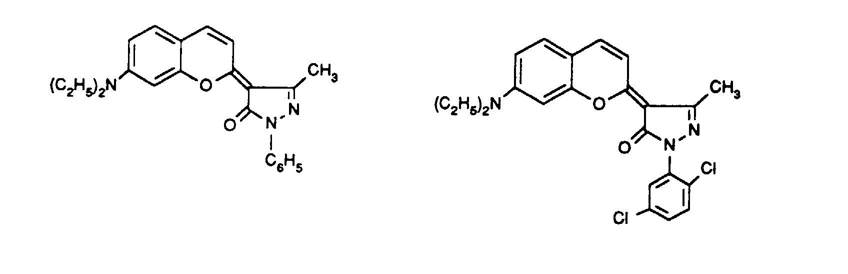

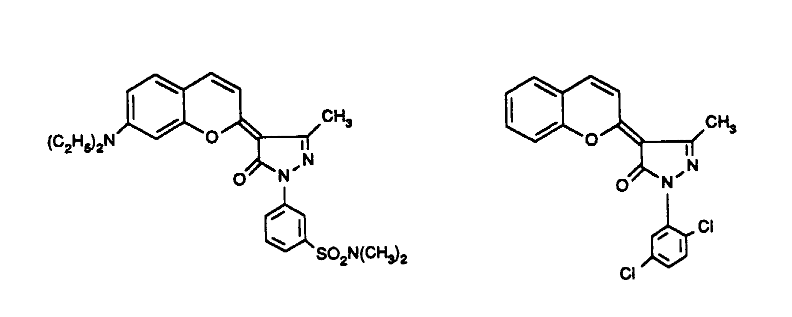

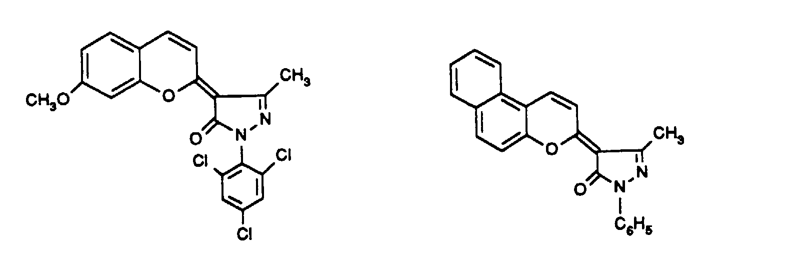

8. Verfahren nach wenigstens einem der vorhergehenden Ansprüche, dadurch gekennzeichnet, daß der Kunststoff ein Thermoplast ist

9. Verfahren nach Anspruch 1, dadurch gekennzeichnet, daß der zu färbende Kunststoff ein Vinylpolymeres oder ein Polyester ist.

10. Kunststoffe, gefärbt nach wenigstens einem der Verfahren 1 bis 9.

11. Nicht faserartige gefärbte Kunststoffmassen, dadurch gekennzeichnet, daß sie mit einem Farbstoff der folgenden Formel gefärbt sind 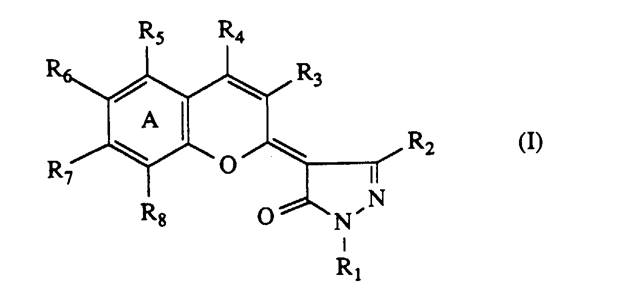 worin bedeuten
R₁ Alkyl, Aralkyl, Aryl oder Heterocyclyl, wobei diese Reste substituiert oder unsubstituiert sein können,
R₂ Alkyl, Aralkyl, Aryl, Heterocyclyl, Alkoxycarbonyl, Dialkylcarbamoyl, Alkoxyacyloxy oder ein Rest der Formel -NZ₁Z₂, wobei diese Reste substituiert oder unsubstituiert sein können, oder Chlor, Brom, Cyano, Hydroxy,
Z₁ Wasserstoff, Alkyl, Aralkyl, Aryl, Cycloalkyl oder einen heterocyclischen Rest und
Z₂ einen Acylrest oder
Z₁ und Z₂ zusammen mit dem gemeinsamen N-Atom den 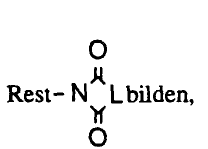
L = 1,2-Phenylen, 1,2, 2,3- oder 1,8-Naphthylen, 1,2-Cyclohexen-1-ylen, 1,2-Ethanylen oder 1,2-Ethylen.
R₃ Wasserstoff, Alkyl, Aryl, Halogen, Hydroxy, Alkoxy, Cyano, Alkoxycarbonyl, Formyl, Dialkylcarbamoyl, Alkylsulfonyl, Arylsulfonyl, Dialkylaminosulfonyl,
R₄ Wasserstoff, Alkyl, Aryl, Hydroxy, Alkoxy, Halogen, Cyano, Alkoxycarbamoyl, Alkylsulfonyl, Arylsulfonyl,
R₅ bis R₈ gleich oder verschieden, Wasserstoff, Alkyl, Aryl, Heterocyclyl, Alkoxy, Aryloxy, Hydroxy, Amino, mono- oder disubstituiertes Amino wie z.B. Alkylamino, Dialkylamino, Alkylsulfonyl, Arylsulfonyl, Dialkylsulfonamido, Halogen oder zusammen mit einem benachbarten Rest ein ankondensierter aromatischer oder heterocyclischer Ring.

## Claims

1. Process for the mass-coloration of plastics with a dyestuff, characterised in that the dyestuff has the following formula 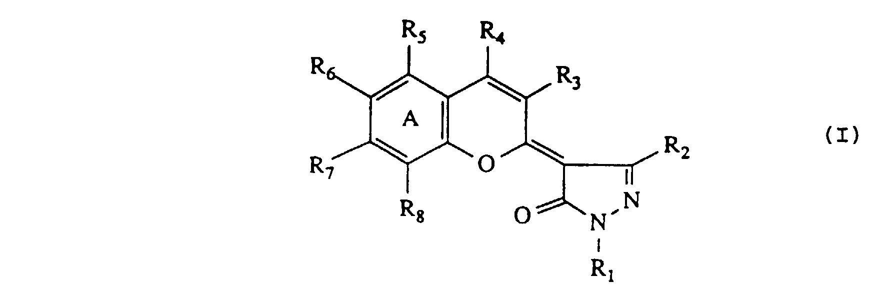 in which
R₁ denotes alkyl, aralkyl, aryl or heterocyclyl, it being possible for these radicals to be substituted or unsubstituted,
R₂ denotes alkyl, aralkyl, aryl, heterocyclyl, alkoxycarbonyl, dialkylcarbamoyl, alkoxyacyloxy, or a radical of the formula -NZ₁Z₂, it being possible for these radicals to be substituted or unsubstituted, or denotes chlorine, bromine, cyano, hydroxyl,
Z₁ denotes hydrogen, alkyl, aralkyl, aryl, cycloalkyl or a heterocyclic radical and
Z₂ denotes an acyl radical or
Z₁ and Z₂ together with the joint N atom form the radical 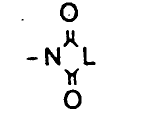
L is 1,2-phenylene, 1,2-, 2,3- or 1,8-naphthylene, 1,2-cyclohex-1-enylene, 1,2-ethanylene or 1,2-ethylene
R₃ denotes hydrogen, alkyl, aryl, halogen, hydroxyl, alkoxy, cyano, alkoxycarbonyl, formyl, dialkylcarbamoyl, alkylsulphonyl, arylsulphonyl, dialkylaminosulphonyl,
R₄ denotes hydrogen, alkyl, aryl, hydroxyl, alkoxy, halogen, cyano, alkoxycarbamoyl, alkylsulphonyl, arylsulphonyl,
R₅ to R₈, identical or different, denote hydrogen, alkyl, aryl, heterocyclyl, alkoxy, aryloxy, hydroxyl, amino, mono- or disubstituted amino, such as, for example, alkylamino, dialkylamino, alkylsulphonyl, arylsulphonyl, dialkylsulphonamido, halogen, or together with an adjacent radical denote a fused-on aromatic or heterocyclic ring.

2. Process according to Claim 1, characterised in that R₃ to R₈ denote hydrogen.

3. Process according to at least one of the preceding claims, characterised in that R₅ and R₆ together denote the radical of an aromatic or heterocyclic ring fused onto ring A.

4. Process according to at least one of the preceding claims, characterised in that
R₇ denotes alkoxy, in particular C₁-C₄-alkoxy, and NR₁₀R₁₁, in which
R₁₀ and R₁₁ denote hydrogen, optionally alkoxy-, aryloxy-, acyloxy-, cyano-, hydroxyl-, dialkylamino-, halogen-substituted alkyl, aryl, aralkyl or together with the joint N atom denote a heterocyclic radical, or a ring bond to ring A.

5. Process according to at least one of the preceding claims, characterised in that
R¹ denotes phenyl, naphthyl, it being possible for the substituents in turn to be substituted,
R² denotes C₁-C₄-alkyl, phenyl.

6. Process according to Claim 4, characterised in that
R₁₀, R₁₁, identical or different, denote C₁-C₄-alkyl or together with the joint N atom denote the radical of a 5- or 6-membered heterocycle.

7. Process according to Claim 1, characterised in that at least one of the following dyestuffs is used:

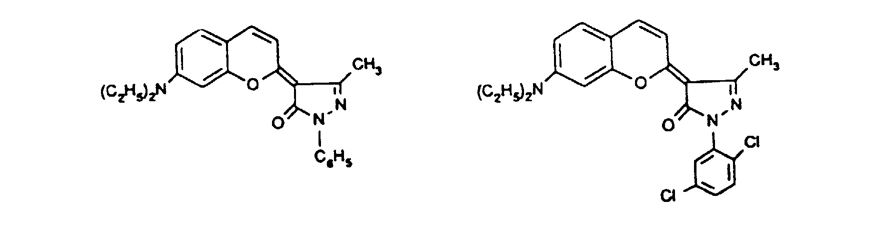

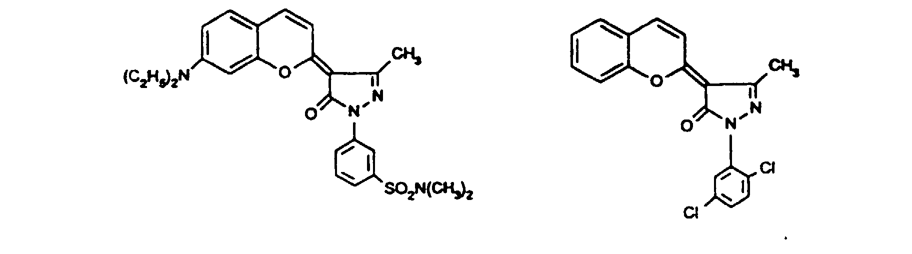

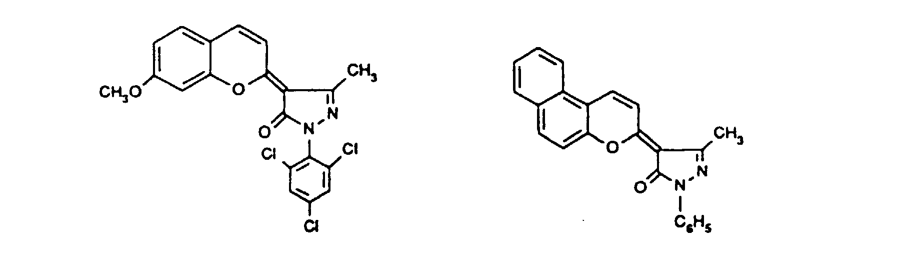

8. Process according to at least one of the preceding claims, characterised in that the plastic is a thermoplastic.

9. Process according to Claim 1, characterised in that the plastic to be coloured is a vinyl polymer or a polyester.

10. Plastics coloured by at least one of processes 1 to 9.

11. Non-fibrous coloured plastics, characterised in that they are coloured by a dyestuff of the following formula 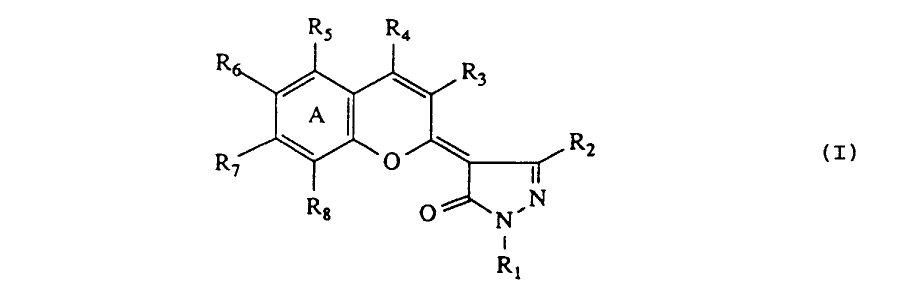 in which
R₁ denotes alkyl, aralkyl, aryl or heterocyclyl, it being possible for these radicals to be substituted or unsubstituted,
R₂ denotes alkyl, aralkyl, aryl, heterocyclyl, alkoxycarbonyl, dialkylcarbamoyl, alkoxyacyloxy, or a radical of the formula -NZ₁Z₂, it being possible for these radicals to be substituted or unsubstituted, or denotes chlorine, bromine, cyano, hydroxyl,
Z₁ denotes hydrogen, alkyl, aralkyl, aryl, cycloalkyl or a heterocyclic radical and
Z₂ denotes an acyl radical or
Z₁ and Z₂ together with the joint N atom form the radical 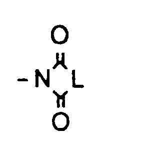
L is 1,2-phenylene, 1,2-, 2,3- or 1,8-naphthylene, 1,2-cyclohex-1-enylene, 1,2-ethanylene or 1,2-ethylene,
R₃ denotes hydrogen, alkyl, aryl, halogen, hydroxyl, alkoxy, cyano, alkoxycarbonyl, formyl, dialkylcarbamoyl, alkylsulphonyl, arylsulphonyl, dialkylaminosulphonyl,
R₄ denotes hydrogen, alkyl, aryl, hydroxyl, alkoxy, halogen, cyano, alkoxycarbamoyl, alkylsulphonyl, arylsulphonyl,
R₅ to R₈, identical or different, denote hydrogen, alkyl, aryl, heterocyclyl, alkoxy, aryloxy, hydroxyl, amino, mono- or disubstituted amino, such as, for example, alkylamino, dialkylamino, alkylsulphonyl, arylsulphonyl, dialkylsulphonamido, halogen, or together with an adjacent radical denote a fused-on aromatic or heterocyclic ring.

## Revendications

1. Procédé pour colorer des résines synthétiques dans la masse, caractérisé en ce que l'on utilise un colorant répondant à la formule : 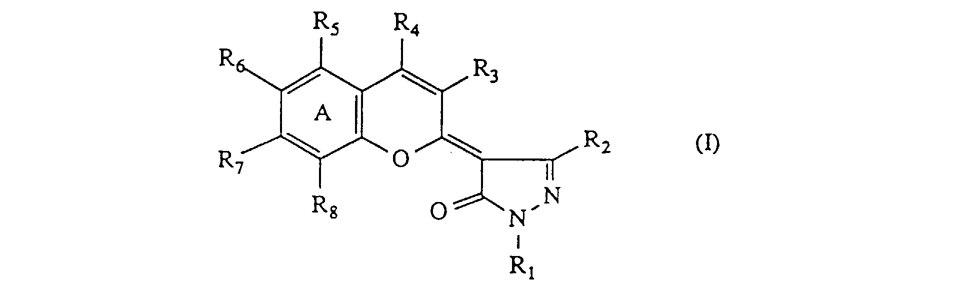 dans laquelle
R₁ représente un groupe alkyle, aralkyle, aryle ou hétérocyclyle, ces groupes pouvant eux-mêmes être substitués ou non,
R₂ représente un groupe alkyle, aralkyle, aryle, hétérocyclyle, alcoxycarbonyle, dialkylcarbamoyle, alcoxyacyloxy ou un groupe de formule -NZ₁Z₂, ces groupes pouvant eux-mêmes être substitués ou non, ou bien le chlore, le brome, un groupe cyano, hydroxy,
Z₁ représente l'hydrogène, un groupe alkyle, aralkyle, aryle, cycloalkyle ou un radical hétérocyclique et
Z₂ représente un radical acyle, ou bien
Z1 et Z2 forment ensemble et avec l'atome d'azote commun le groupe 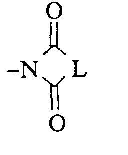 dans lequel
L représente un groupe 1,2-phénylène, 1,2-, 2,3- ou 1,8-naphtylène, 1,2-cyclohexène-1-ylène, 1,2-éthanylène ou 1,2-éthylène,
R₃ représente l'hydrogène, un groupe alkyle, aryle, un halogène, un groupe hydroxy, alcoxy, cyano, alcoxycarbonyle, formyle, dialkylcarbamoyle, alkylsulfonyle, arylsulfonyle, dialkylaminosulfonyle,
R₄ représente l'hydrogène, un groupe alkyle, aryle, hydroxy, alcoxy, un halogène, un groupe cyano, alcoxycarbamoyle, alkylsulfonyle, arylsulfonyle,
R₅ à R₈, ayant des significations identiques ou différentes, représentent chacun l'hydrogène, un groupe alkyle, aryle, hétérocyclyle, alcoxy, aryloxy, hydroxy, amine, amino mono- ou di-substitué, par exemple alkylamino, dialkylamino, alkylsulfonyle, arylsulfonyle, dialkylsulfonamido, un halogène, ou bien forment ensemble et avec un groupe voisin un noyau aromatique ou hétérocyclique condensé.

2. Procédé selon revendication 1, caractérisé en ce que R₃ à R₈ représentent l'hydrogène.

3. Procédé selon au moins une des revendications qui précèdent, caractérisé en ce que R₅ et R₆ représentent ensemble le radical d'un noyan aromatique ou hétérocyclique condensé sur le cycle A.

4. Procédé selon au moins une des revendications qui précèdent, caractérisé en ce que
R₇ représente un groupe alcoxy, plus spécialement alcoxy en C₁ à C₄, ou un groupe NR₁₀R₁₁, dans lequel
R10 et R₁₁ représentent chacun l'hydrogène, un groupe alkyle, aryle, aralkyle éventuellement substitué par des groupes alcoxy, aryloxy, acyloxy, cyano, hydroxy, dialkylamino, des halogènes, ou bien forment ensemble et avec l'atome d'azote voisin un radical hétérocyclique ou une liaison cyclique au noyau A.

5. Procédé selon au moins une des revendications qui précèdent, caractérisé en ce que
R¹ représente un groupe phényle, naphtyle, ces substituants pouvant eux-mêmes être substitués,
R² représente un groupe alkyle en C₁ à C₄, phényle.

6. Procédé selon revendication 4, caractérisé en ce que
R₁₀, R₁₁, ayant des significations identiques ou différentes, représentent chacun un groupe alkyle en C₁ à C₄ ou forment ensemble et avec l'atome d'azote voisin, le radical d'un hétérocycle à 5 ou 6 chaînons.

7. Procédé selon revendication 1, caractérisé en ce que l'on utilise au moins un des colorants suivants :

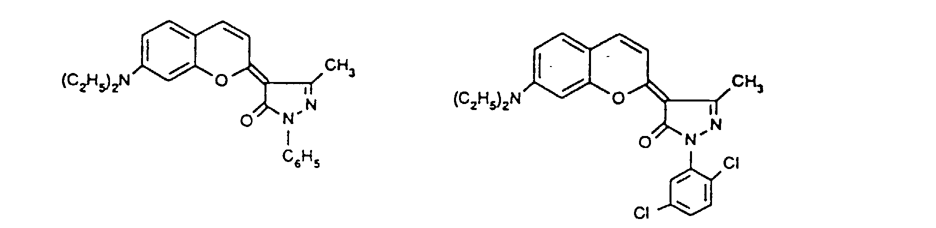

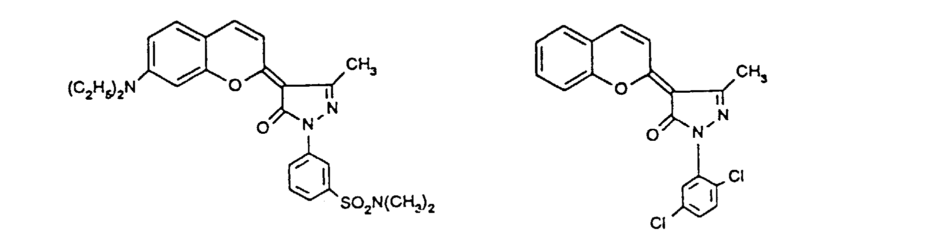

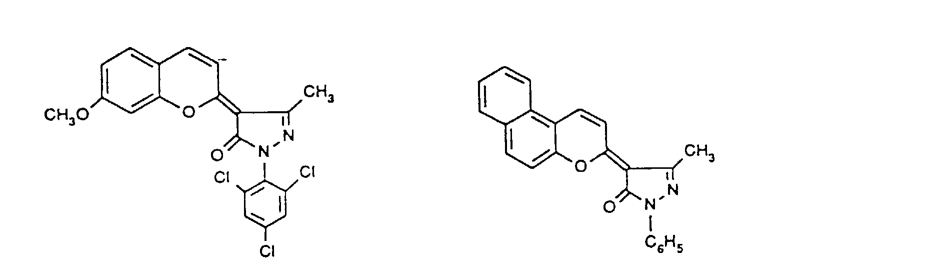

8. Procédé selon au moins une des revendications qui précèdent, caractérisé en ce que la résine synthétique est une résine thermoplastique.

9. Procédé selon la revendication 1, caractérisé en ce que la résine synthétique à colorer est un polymère vinylique ou un polyester.

10. Résines synthétiques colorées selon au moins un des procédés 1 à 9.

11. Masses de résines synthétiques non fibreuses colorées, caractérisées en ce qu'elles sont colorées à l'aide d'un colorant de formule : 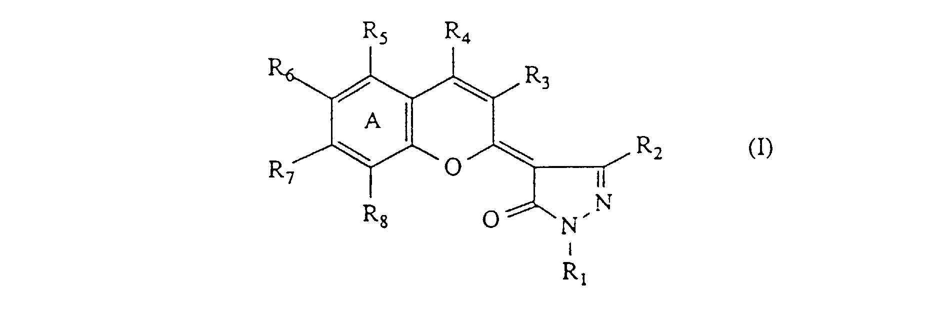 dans laquelle
R₁ représente un groupe alkyle, aralkyle, aryle ou hétérocyclyle qui peuvent être substitués ou non,
R₂ représente un groupe alkyle, aralkyle, aryle, hétérocyclyle, alcoxycarbonyle, dialkylcarbamoyle, alcoxyacyloxy ou un groupe de formule -NZ₁Z₂, ces groupes pouvant être substitués ou non, ou bien le chlore, le brome, un groupe cyano, hydroxy,
Z₁ représente l'hydrogène, un groupe alkyle, aralkyle, aryle, cycloalkyle ou un radical hétérocyclique et
Z₂ représente un radical acyle, ou bien
Z1 et Z2 forment ensemble et avec l'atome d'azote voisin le groupe 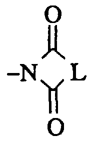 dans lequel
L représente un groupe 1,2-phénylène, 1,2-, 2,3- ou 1,8-naphtylène, 1,2-cyclohexène-1-ylène, 1,2-éthanylène ou 1,2-éthylène,
R₃ représente l'hydrogène, un groupe alkyle, aryle, un halogène, un groupe hydroxy, alcoxy, cyano, alcoxycarbonyle, formyle, dialkylcarbamoyle, alkylsulfonyle, arylsulfonyle, dialkylaminosulfonyle,
R₄ représente l'hydrogène, un groupe alkyle, aryle, hydroxy, alcoxy, un halogène, un groupe cyano, alcoxycarbamoyle, alkylsulfonyle, arylsulfonyle,
R₅ à R₈, ayant des significations identiques ou différentes, représentent chacun l'hydrogène, un groupe alkyle, aryle, hétérocyclyle, alcoxy, aryloxy, hydroxy, amino, amino mono- ou di-substitué, par exemple alkylamino, dialkylamino, alkylsulfonyle, arylsulfonyle, dialkylsulfonamido, un halogène, ou bien forment ensemble et avec un groupe voisin un noyau aromatique ou hétérocyclique condensé.
